Europäisches Patentamt

European Patent Office

Office européen des brevets

(19)

(11) Veröffentlichungsnummer : **0 086 400**
**B1**

(12) **EUROPÄISCHE PATENTSCHRIFT**

(45) Veröffentlichungstag der Patentschrift :
30.12.86

(21) Anmeldenummer : 83100972.5

(22) Anmeldetag : 02.02.83

(51) Int. Cl.⁴ : **B 29 C 47/34**, B 29 B 9/06

(54) Vorrichtung zum Zuleiten von schmelzflüssigen Kunststoffsträngen zu einer schrägen Ablaufrinne.

(30) Priorität : 12.02.82 DE 3205052

(43) Veröffentlichungstag der Anmeldung :
24.08.83 Patentblatt 83/34

(45) Bekanntmachung des Hinweises auf die Patenterteilung : 30.12.86 Patentblatt 86/52

(84) Benannte Vertragsstaaten :
BE CH DE FR GB IT LI LU NL

(56) Entgegenhaltungen :
EP-A- 0 079 609
DE-B- 2 230 187
DE-B- 2 503 455

(73) Patentinhaber : AUTOMATIK Apparate-Maschinenbau GmbH
Ostring 19
D-8754 Grossostheim 2 (DE)

(72) Erfinder : Lettner, Horst H., Ing. grad.
Jahnstrasse 22
D-8752 Glattbach (DE)
Erfinder : Hunke, Friedrich, Ing. grad.
Westring 38
D-8754 Grossostheim 2 (DE)
Erfinder : Hench, Hans
Sonnhalde 31
D-7851 Inzlingen (DE)

(74) Vertreter : Bardehle, Heinz, Dipl.-Ing.
Patent- und Rechtsanwälte Bardehle-Pagenberg-
Dost-Altenburg & Partner Postfach 86 06 20
D-8000 München 86 (DE)

**Beschreibung**

Die Erfindung bezieht sich auf eine Vorrichtung zum Zuleiten von schmelzflüssigen Kunststoffsträngen zu einer schrägen Ablaufrinne, die an ihrem oberen Ende bis hinter die Fallinie der aus Düsen austretenden Stränge reicht, in der Betriebslage die Stränge auffängt und in eine Vorlaufstellung bewegbar ist, in der sie den freien Durchtritt der Stränge neben ihr gestattet, wobei auf das obere Ende der Ablaufrinne ein Kühlwasserzulauf gerichtet ist.

Eine derartige Vorrichtung ist aus der DE-C-2 503 455 bekannt. Bei dieser Vorrichtung geht die Ablaufrinne im Bereich ihres oberen Endes in eine verschwenkbare Klappe über, die auf einer quer zur Ablaufrinne verlaufenden, am oberen Ende der Klappe angeordneten Achse derart gelagert ist, daß beim Verschwenken der Klappe diese zwei Lagen einnehmen kann, nämlich eine Betriebslage, in der die der Achse abgewandte Seite der Klappe in die Ablaufrinne so übergeht, daß sich hinsichtlich des Ablaufs der Stränge und des Kühlwassers ein geschlossenes Gebilde ergibt, in dem die Klappe Bestandteil der Ablaufrinne ist, wobei die Klappe die aus den Düsen austretende Stränge aufhängt und mit dem Kühlwasser der Ablaufrinne zuleitet, und eine Außerbetriebslage, in der die Klappe derart von der Ablaufrinne weggeschwenkt ist, daß die aus den Düsen austretenden Stränge zwischen der Klappe und der Ablaufrinne herabfallen.

Bei diesem Betriebszustand, der sogenannten Vorlaufstellung, handelt es sich im allgemeinen darum, vor Beginn der Verarbeitung von Kunststoffsträngen, die danach über die Ablaufrinne einem Granulator zugeführt werden, das anfangs aus den Düsen austretende Material zunächst abzuleiten, da dieses in der Regel Verschmutzungen enthält bzw. noch nicht seine endgültige gleichmäßige Zusammensetzung erfahren hat. Wird nun die Klappe in ihre Betriebslage zurückgeschwenkt, so muß sie die Fallinie der Stränge durchlaufen, die dabei an der Klappe hängenbleiben können. Um diesem Problem aus dem Wege zu gehen, kann man für den Zeitraum des Verschwenkens der Klappe aus der Vorlaufstellung in die Betriebslage entweder den Schmelzefluß abschalten oder den Schmelzefluß durch Überstreichen der betreffenden Düsenplatte mit einem Spachtel oder dergleichen unterbrechen, was durch eine Bedienungsperson durchgeführt werden muß.

Der Erfindung liegt die Aufgabe zugrunde, diesen vorstehend beschriebenen Vorgang zu automatisieren und so zu gestalten, daß beim Übergang der Vorrichtung aus der Vorlaufstellung in die Betriebslage keine frischen Stränge an der Vorrichtung hängenbleiben können.

Hierzu wird in der nicht vorveröffentlichten, älteren europäischen Patentanmeldung EP-A1-79 609 (veröffentlicht am 25.5.1983) in Zusammenhang mit einer Ablaufrinne mit im Bereich ihres oberen Endes verschwenkbarer Klappe angegeben, diese Klappe an ihrem unteren Ende drehbar zu lagern und mit einem als Messer ausgebildeten Trennelement zu versehen, das beim Verschwenken der Klappe die die Stränge liefernden Düsen überstreicht.

Die Erfindung geht zur Lösung des vorstehend angegebenen Problems einen anderen Weg, indem sie das Problem dadurch löst, daß die Ablaufrinne an ihrem oberen Ende einen ihr gegenüber längs einer Schlittenführung aus der Vorlaufstellung in die Betriebslage verschiebbaren Abschnitt aufweist, der in der Betriebslage die Stränge auffängt und dem ein Trennelement zugeordnet ist, daß beim Verschieben der Stirnseite des Abschnitts durch die Fallinie der Stränge in die Betriebslage die Stränge erfaßt und anschließend durchtrennt.

Durch den aus der Vorlaufstellung in die Betriebslage bewegbaren Abschnitt wird einerseits dafür gesort, daß die Stränge in der Vorlaufstellung abgeleitet werden können, wodurch vermieden wird, daß das betreffende Strangmaterial in das herzustellende Granulat gelangt. Andererseits sorgt der Abschnitt in seiner Betriebslage dafür, die aus vollwertigem Material bestehenden Stränge der Ablaufrinne zuzuleiten, wobei mit der Bewegung des Abschnitts aus der Vorlaufstellung in die Betriebslage durch das Trennelement die Stränge erfaßt werden, womit diese von dem Abschnitt so fern gehalten werden können, daß sie nicht an diesem ankleben. Die nach dieser Erfassung der Stränge erfolgende Durchtrennung der Stränge sorgt dann dafür, daß die frischen Stränge ungehindert über den Abschnitt und die Ablaufrinne abgeleitet werden können.

Da das vorstehend beschriebene Wirksamwerden des Trennelementes beim Verschieben der Stirnseite des Abschnitts durch die Fallinie der Stränge erfolgt, kann man den Abschnitt selbst mit dem Trennelement versehen, womit das Wirksamwerden des Trennelementes mit der Bewegung des Abschnitts direkt gekoppelt ist.

Andererseits ist es auch möglich, das Trennelement auf einer eigenen Führung anzubringen und diese über eine Steuerung mit dem Abschnitt zu koppeln, so daß die erforderliche Synchronisierung der Bewegung des Abschnitts und des Trennelementes durch die Steuerung herbeigeführt wird. Eine derartige Kopplung ist insbesondere dann sinnvoll, wenn eine solche bei der betreffenden Vorrichtung bereits für die Steuerung anderer Vorgänge existiert.

Als Trennelement kann man vorteilhaft ein Abstreifmesser verwenden, daß bei der Bewegung des Abschnitts in die Betriebslage eine die Düsen enthaltende Platte überstreicht und dabei die austretenden Stränge unterbricht. Im Zeitraum der Unterbrechung bewegt sich dann die Stirnseite des Abschnitts durch die Fallinie der Stränge hindurch, so daß diese nicht an dieser Stirnseite festkleben können. Das nach der Unterbrechung austretende frische Strangmaterial gelangt dann auf den in der Betriebslage befindlichen Abschnitt, wird von diesem aufgefangen und der Ablaufrinne zugeleitet.

Es ist aber auch möglich, als Trennelement eine mit Abstand oberhalb des oberen Endes des Abschnitts angeordnete Stange zu verwenden, die bei der Bewegung des Abschnitts in die Betriebslage die Stränge ohne deren wesentliche Abkühlung auffängt und gegenüber den weiterfließenden Strängen bis zu deren Abreißen festhält. An der durch die Stränge hindurchbewegten Stange hängen sich die Stränge zunächst auf, fallen dann jedoch aufgrund der Schwerkraft von der Stange ab, da durch die räumlich getrennte Anordnung der Stange vom oberen Ende des Abschnitts dafür gesorgt ist, daß die Stange nicht gekühlt wird und infolgedessen die Stränge an der Stange zunächst den schmelzflüssigen Zustand beibehalten. In diesem Zustand der Stränge können diese dann ohne weiteres von der Stange abfallen.

Es sei noch darauf hingewiesen, daß es aus der DE-B-2 230 187 bekannt ist, bei einer Vorrichtung zum Abziehen von Kunststoffsträngen aus Extrusionsdüsen und Zuleitung der Kunststoffstränge in einen nach oben offenen Kühlbadbehälter eine Rutsche vorzusehen, die in ihrer wirksamen Stellung, also in ihrer Betriebslage, die Stränge von dem Kühlbadbehälter ableitet und so umlenkt, daß sie in eine Auffangvorrichtung gelangen. Mit dieser in die Fallinie der Stränge ein- und ausfahrbaren Rutsche ist ein Messer gekoppelt, daß die Kunststoffstränge beim Herausfahren der Rutsche aus ihrer wirksamen Stellung abschneidet.

Die Erfindung geht demgegenüber einen grundsätzlich anderen Weg, da der im Zusammenhang mit der Erfindung verwendete, einen Bestandteil der Ablaufrinne bildende Abschnitt in seiner wirksamen Stellung, nämlich seiner Betriebslage, die Stränge der Ablaufrinne zuleitet, dagegen in seiner Außerbetriebslage, der sogenannten Vorlaufstellung, die Stränge frei an sich vorbeifallen läßt, um diese auf diese Weise von dem Verarbeitungsvorgang fernzuhalten. Bei der Erfindung wird also ein Bestandteil der Ablaufrinne, das es in diesem Sinne beim Gegenstand der DE-AS-2 230 187 nicht gibt, dazu ausgenutzt, dem zunächst noch nicht einwandfreien Strangmaterial einen im wesentlichen freien Durchtritt ohne Kühlung zu gestatten, so daß sich dieses Strangmaterial als Abfallkuchen ansammeln kann, der sich in dieser Form leicht abtransportieren läßt. Demgegenüber muß beim Gegenstand der DE-B-2 230 187 die Rutsche gekühlt werden, da sie aktiv in ihrer Betriebsstellung dafür sorgt, die zunächst unverarbeitbaren Stränge abzuleiten. Ohne Kühlung der Rutsche würden diese an ihr festkleben. Mithin entsteht bei dieser Art der Ableitung unverarbeitbaren Strangmaterials ein Stranggewirr mit wesentlich niedrigerem Volumengewicht als der vorstehend erwähnte Abfallkuchen. Das Gewirr läßt sich wesentlich schlechter beseitigen läßt als ein Abfallkuchen.

In den Figuren ist ein Ausführungsbeispiel der Erfindung dargestellt. Es zeigen

Figur 1 die Vorrichtung mit einem am verschiebbaren Abschnitt angebrachten Abstreifmesser als Trennelement,

Figuren 2a und 2b der den verschiebbaren Abschnitt und das Abstreifmesser enthaltene Teil der Figur 1 in vergrößerter Darstellung in zwei Betriebsphasen,

Figur 3 die Vorrichtung mit einer am verschiebbaren Abschnitt angebrachten Stange als Trennelement,

Figuren 4a und 4b der den verschiebbaren Abschnitt und die Stange enthaltende Teil der Figur 3 in vergrößerter Darstellung in zwei Betriebsphasen,

Figur 5 eine vergrößerte Darstellung der Betriebsphase gemäß Figur 4b mit gerade aufgefangenem Strang,

Figuren 6a und 6b der den verschiebbaren Abschnitt enthaltende Teil der Vorrichtung und ein Abstreifmesser, das über eine Steuerung mit dem verschiebbaren Abschnitt gekoppelt ist.

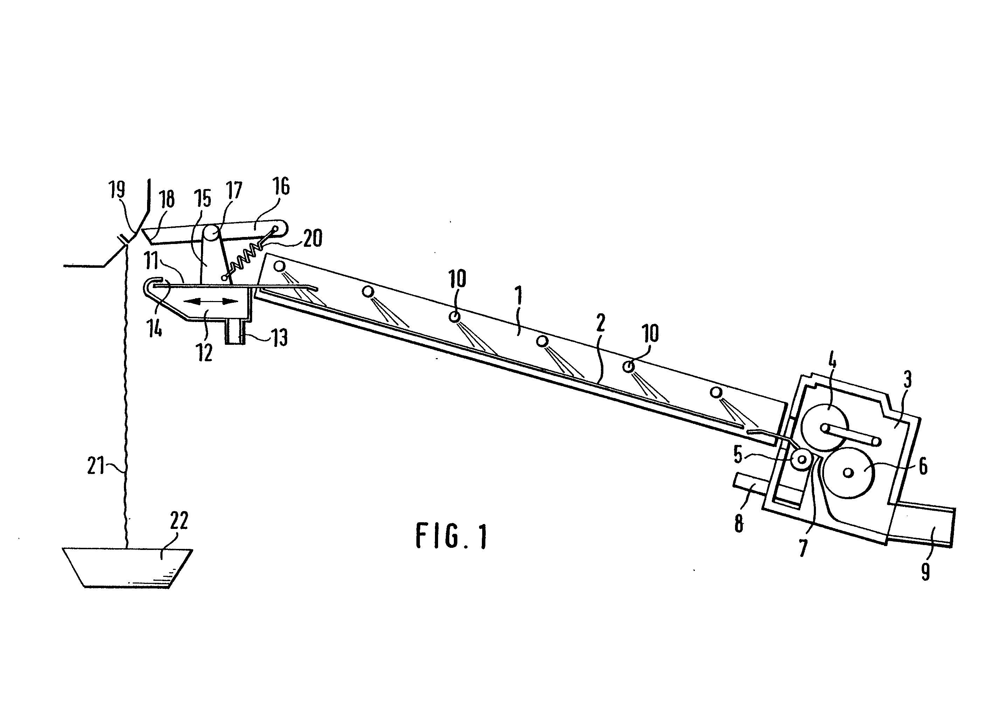

Die in Figur 1 dargestellte Vorrichtung enthält die Ablaufrinne 1, deren Aufbau in näher detaillierter Weise der oben erwähnten DE-AS 2 503 455 zu entnehmen ist. Ablaufrinne 1 enthält den Boden 2, über den die Kunststoffstränge hinabgleiten und am Ende der Ablaufrinne 1 in den prinzipiell dargestellten Granulator 3 gelangt. Dieser enthält die beiden Einzugswalzen 4 und 5 sowie den Fräser 6, der in bekannter Weise mit dem Gegenmesser 7 zusammenwirkt. Dem Granulator 3 wird zusätzlich Kühlwasser über den Anschluß 8 zugeführt. Das im Granulator 3 erzeugte Granulat wird dann mit dem Kühlwasser über den Auslaß 9 abgeleitet. Oberhalb des Bodens 2 sind mit Kühlwasser beschickte Sprühdüsen 10 angeordnet, die längs der Ablaufrinne 1 für eine zusätzliche Kühlwasserzufuhr sorgen. Am oberen Ende der Ablaufrinne 1 ist der verschiebbare Abschnitt 11 vorgesehen, der entsprechend dem eingezeichneten Doppelpfeil in horizontaler Richtung hin und her verschiebbar angeordnet ist. Der verschiebbare Abschnitt 11 bildet das obüre Ende der Ablaufrinne 1 und ist somit Bestandteil von dieser. Der verschiebbare Abschnitt 11 enthält weiterhin den Wasserkasten 12, dem über den Zulauf 13 Kühlwasser zugeführt wird, das durch den Schlitz 14, gebildet durch den verschiebbaren Abschnitt 11 und die Wandung des Wasserkastens 12, austritt, über den Abschnitt 11 wegläuft und danach auf den Boden 2 der Ablaufrinne 1 gelangt. Durch die Richtung des Schlitzes 14 und den Druck, mit dem das Kühlwasser dem Wasserkasten 12 zugeleitet wird, wird dafür gesorgt, daß das Kühlwasser aus dem Schlitz 14 stets mit erheblicher Geschwindigkeit in Richtung auf die Ablaufrinne 1 zuströmt.

An dem Wasserkasten 12 ist über die Stütze 15 der Hebelarm 16 angebracht, der in seiner Mitte drehbar auf der Achse 17 gelagert ist. An seinem der Ablaufrinne 1 abgewandten Ende ist der Hebel 16 mit dem Abstreifmesser 18 versehen, das an der Düsenplatte 19 anliegt. Das Abstreifmesser 18 wird durch die in den Hebel 16 eingehängte Zugfeder 20 gegen die Düsenplatte 19 gedrückt.

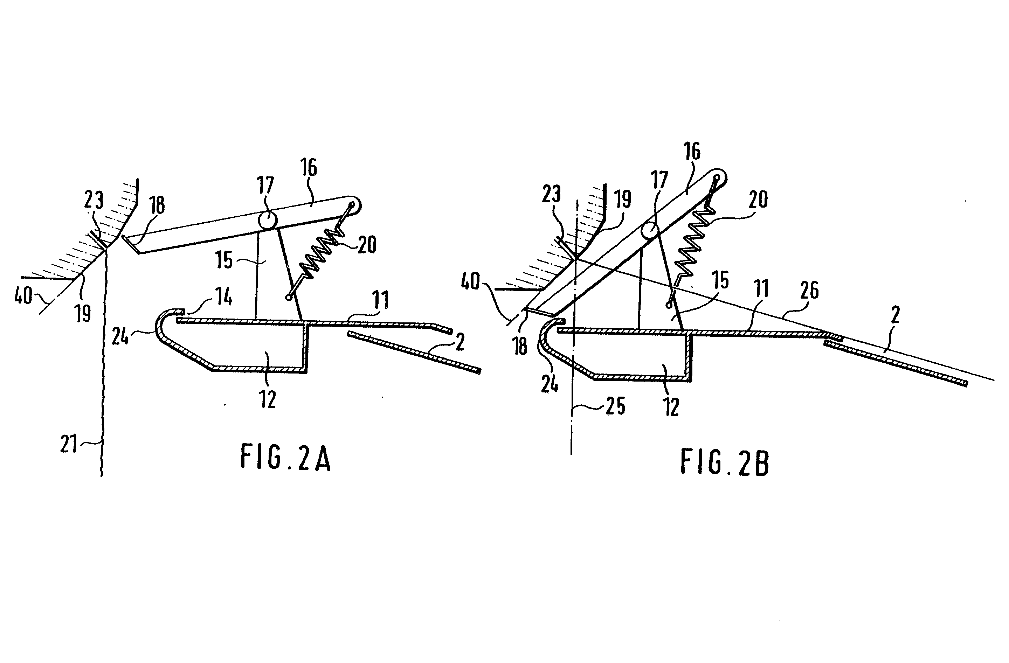

In der in der Figur 1 dargestellten Betriebslage befindet sich der Abschnitt 11 in der Vorlaufstellung, in der aus unverarbeitbarem Material bestehende Stränge 21 aus der Düsenplatte 19 herabfallen und in den Abfallbehälter 22 gelangen. Zum Übergang in die Betriebslage wird der Abschnitt 11 aus der in Figur 1 dargestellten Lage nach links hin verschoben. Dieser Vorgang sei nachstehend anhand der Figuren 2a und 2b näher erläutert.

Figur 2a zeigt einen Ausschnitt aus Figur 1, und zwar den verschiebbaren Abschnitt 11 in seiner Vorlaufstellung, in der ein unverarbeitbarer Strang 21 aus der Düse 23 in der Düsenplatte 19 frei herabfällt. In dieser Vorlaufstellung steht das Abstreifmesser 18 gewissermaßen in Wartestellung vor der Düsenplatte 19. Wird nun durch einen nicht dargestellten Vorschubmechanismus, auf den es in diesem Zusammenhang nicht ankommt, beispielsweise eine pneumatisch betätigte Kolben-Zylinder-Einheit, der verschiebbare Abschnitt 11 nach links hin in die in Figur 2b dargestellte Betriebslage verschoben, so wird wegen der mechanischen Verbindung von Abstreifmesser 18 und verschiebbarem Abschnitt 11 das Abstreifmesser 18 mitgenommen und gleitet entlang der Düsenplatte 19 in die in Figur 2b dargestellte Lage, in der als Betriebslage der Abschnitt 11 die aus der Düsenplatte 19 austretenden Stränge auffängt. Bei diesem Vorgang werden unmittelbar an der Düsenplatte 19 die austretenden.Stränge abgetrennt und unterbrochen, so daß das der Unterbrechung folgende Strangmaterial in der strichpunktiert eingezeichneten Fallinie 25 auf den Abschnitt 11 herabfällt und dort vom Strom des aus dem Schlitz 14 austretenden Kühlwasser erfaßt wird. Das Kühlwasser transportiert dann die herabgefallenen Stränge über den Abschnitt 11 in Richtung auf den Boden 2 der Ablaufrinne, so daß die Stränge über den Boden 2 zusammen mit dem Kühlwasser hinablaufen, bis die Stränge schließlich vom in Figur 1 dargestellten Granulator 3 erfaßt werden, der in bekannter Weise einen Zug auf die Stränge ausübt. Die Stränge nehmen dann die in der Figur 2b mit dem Bezugszeichen 26 bezeichnete Lage ein. Das Messer 18 wird in dieser Betriebslage durch die als strichpunktierte Linie angedeutete Hülse 40 gehalten.

Bei diesem Vorgang der Unterbrechung der aus der Düsenplatte 19 austretenden Stränge unter der Wirkung des Abstreifmessers 18 tritt die Stirnseite 24 des Wasserkastens 12 durch die Fallinie 25 der Stränge hindurch, wobei im Falle günstiger Einstellung der Unterbrechung die Stirnseite 24 mit keinem der herabfallenden Stränge in Berührung kommt. Sollte jedoch eine solche Berührung eintreten, so ist dies nicht problematisch, da an der vom Kühlwasser gekühlten Stirnseite 24 die Stränge nicht kleben bleiben können, so daß sie unmittelbar nach Erreichen der in der Figur 2b dargestellten Betriebslage von der Stirnseite 24 abfallen.

Bei diesem Vorgang wird also automatisch ohne eine Manipulation der Bedienungsperson und ohne Unterbrechung des Schmelzestromes von der in Figur 2a dargestellten Vorlaufstellung in die in Figur 2b gezeigte Betriebslage umgeschaltet, wobei in der ersteren Betriebsphase die Schmelze in Form der Schmelzestränge 21 dem Abfall zugeleitet wird und in der in Figur 2b dargestellten Betriebslage zum Boden 2 der Ablaufrinne gelangt. Dabei kann keine zunächst für den Abfall bestimmte Schmelze der Ablaufrinne zugeleitet werden, so daß diese nach Übergang in die in Figur 2b dargestellte Betriebslage nur qualitativ einwandfreies Material erhält.

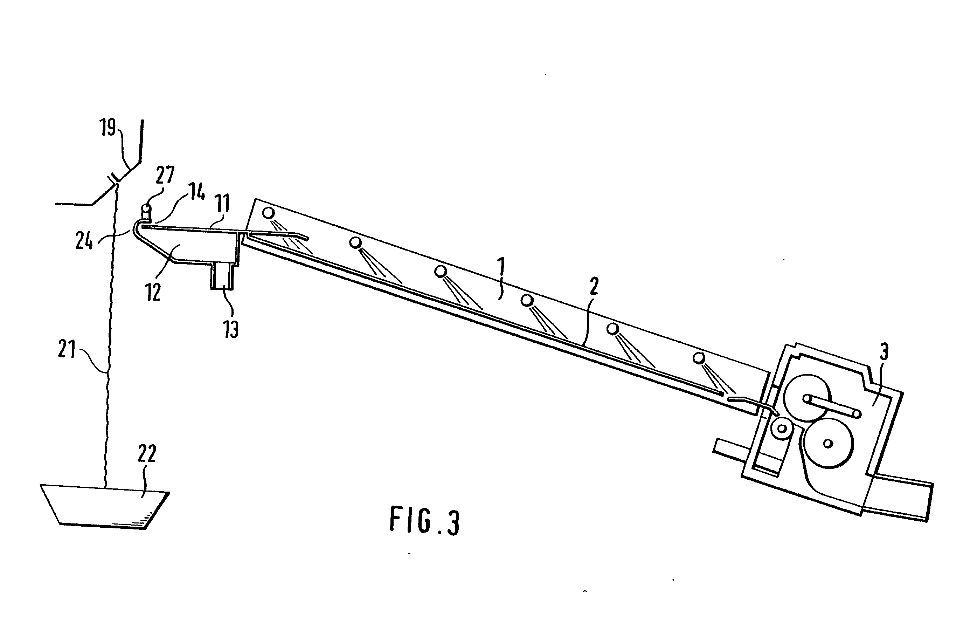

Bei der in Figur 3 dargestellten Vorrichtung, die hinsichtlich der Ablaufrinne 1, dem Granulator 3 und dem Wasserkasten 12 mit verschiebbarem Abschnitt 11 mit der Vorrichtung gemäß Figur 1 übereinstimmt, wird als Trennelement die Stange 27 verwendet, die quer zu den Strängen 21 verläuft, und zwar dabei parallel zur Reihe der Düsen in der Düsenplatte 19. Die Stange 27 ist mit Abstand von der durch die Stränge 21 hindurchbewegten Stirnseite 24 oberhalb des Schlitzes 14 angeordnet, so daß sie durch das dem Wasserkasten 12 zugeführte Kühlwasser nicht gekühlt werden kann.

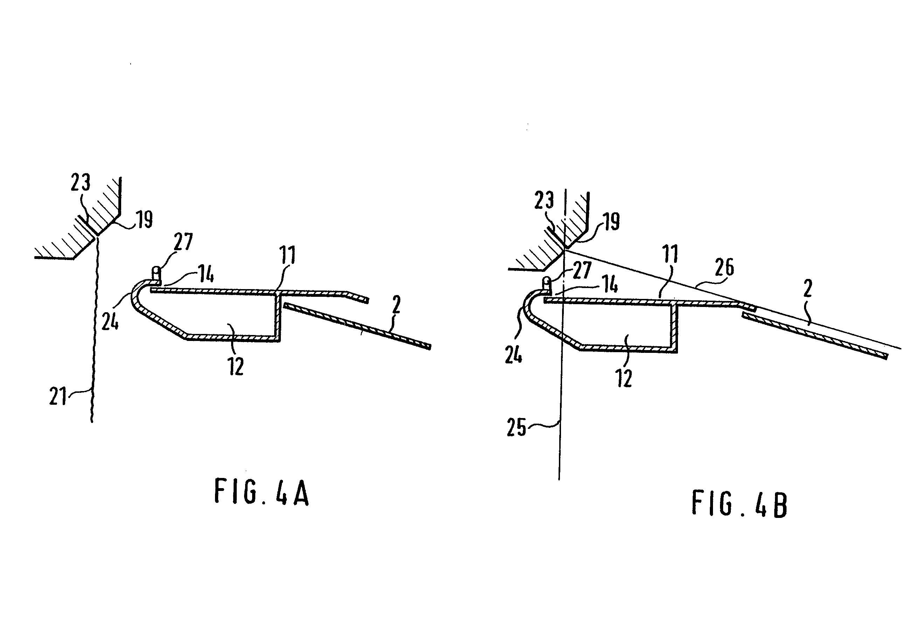

Die Wirkungsweise der Stange 27 sei nunmehr anhand der Figuren 4a und 4b näher erläutert, die den im Wasserkasten 12 mit Abschnitt 11 enthaltenden Teil der Vorrichtung gemäß Figur 3 in den beiden Betriebsphasen, nämlich Vorlaufstellung gemäß Figur 4a und Betriebsstellung gemäß Figur 4b, zeigen.

Bei der in Figur 4a dargestellten Vorlaufstellung fließen zunächst aus unverarbeitbarem Material bestehende Stränge 21 aus den Düsen 23 herab in einen in den Figuren 4a und 4b nicht dargestellten Abfallbehälter (siehe Bezugszeichen 22 in Figur 3). Insofern entspricht die in Figur 4 dargestellte Betriebsphase völlig derjenigen gemäß Figur 2a. Wenn nun die Vorrichtung in die betriebslage gebracht wird, so wird der Wasserkasten 12 mit dem Abschnitt 11 vom Boden 2 der Ablaufrinne weg nach links hin in die in Figur 4b dargestellte Betriebslage verschoben, wobei die Stirnseite 24 durch die Fallinie 25 hindurchläuft und Strangmaterial von der Stange 27 aufgefangen wird.

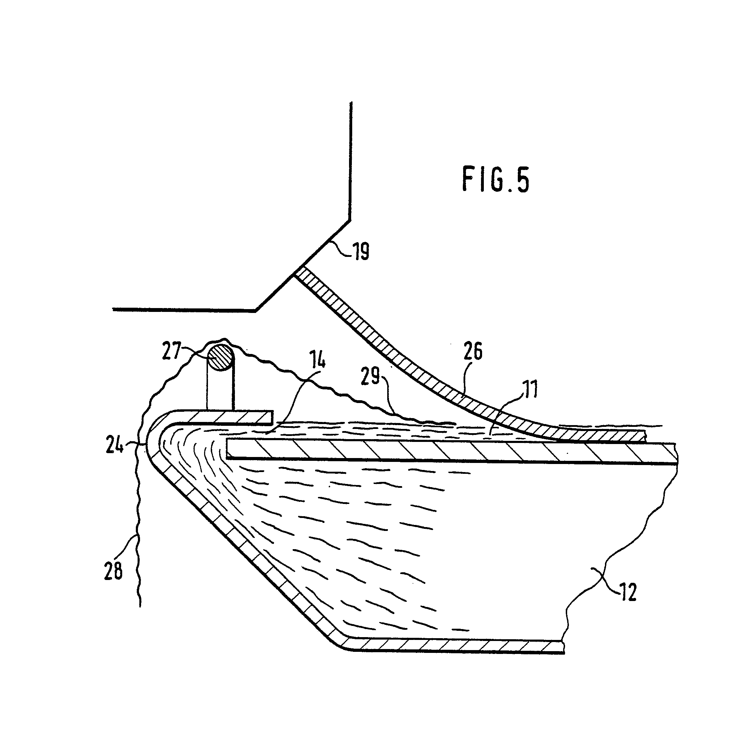

Anhand der Darstellung in Figur 5 sei nunmehr die Wirkung der Stange 27 näher erläutert. Beim Hindurchtreten der Stange 27 durch die Stränge 21 (siehe Figur 4a) hängen sich die Stränge an der Stange 27 auf, wobei sie im Bereich der Stange 27 ihre Temperatur behalten, da die Stange 27 nicht gekühlt ist. Infolgedessen dehnen sich die beiden beidseitig der Stange 27 herabhängenden Enden jedes Stranges, also einerseits das zum Abfall gerichtete Ende 28 und andererseits das zum verschiebbaren Abschnitt 11 gerichtete Ende 29 aus, bis durch diese Ausdehnung das Ende 28 schließlich von der Stange 27 zum Abfall herabfällt. An der Stirnseite 24 kann dabei dieses Ende 28 nicht festkleben, weil die Stirnseite 24 gekühlt ist.

Das Ende 29 wird dann von dem nachfließenden Strang 26, der in Richtung zum Boden 2 eine Schlaufe bildet, mehr und mehr ausgedünnt, bis das Ende 29 schließlich von der Stange 27 abgerissen wird. Es fließt dann weiterhin der Strang 26 über den Abschnitt 11 in Richtung auf den Boden 2 (siehe Figur 4b), bis schließlich der Strang 26 vom Granulator 3 (siehe Figur 3) erfaßt wird und die in Figur 4b dargestellte, gestreckte Lage einnimmt.

Wie ersichtlich, sorgt also bei diesem Übergang von Vorlaufstellung (Figur 4a) in die Betriebslage (Figur 4b) die Stange 27 dafür, daß die Stränge von der als Trennelement wirkenden Stange 27 erfaßt und anschließend durchtrennt werden, wodurch sich automatisch eine Umschaltung der Strangleitung von der Zufuhr zum Abfall zur Zufuhr zur Ablaufrinne 1 ergibt.

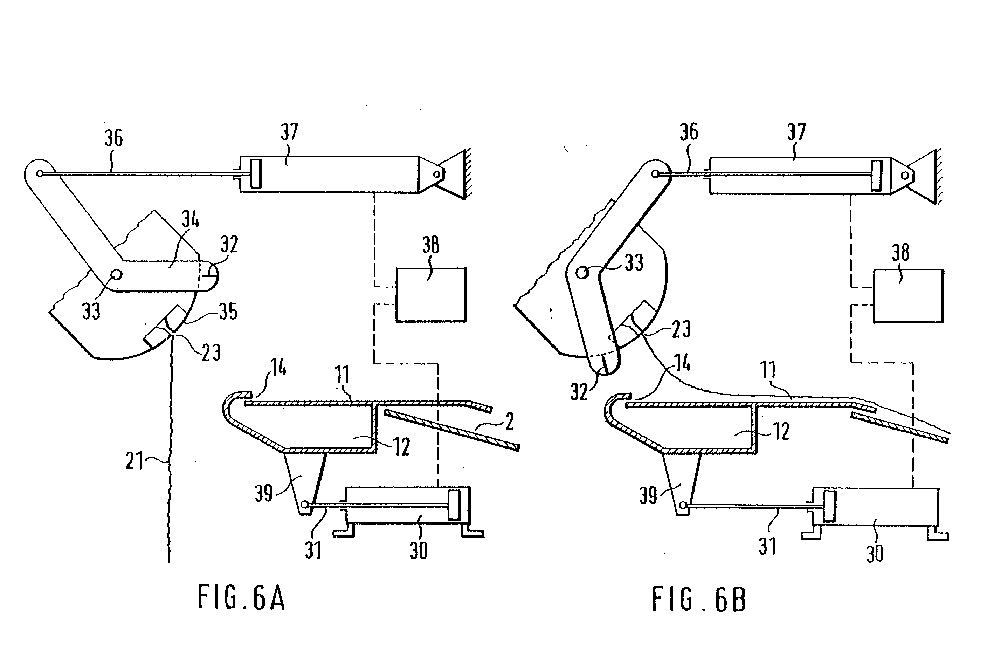

Die Synchronisierung der Bewegung des Trennelements, also gemäß den dargestellten Ausführungsbeispielen des Abstreifmessers 18 bzw. der Stange 27, mit der Bewegung des verschiebbaren Abschnitts 11 läßt sich auch dadurch herbeiführen, daß man diese Bewegungen über eine Steuerung miteinander koppelt. Ein entsprechendes Ausführungsbeispiel unter Zugrundelegung eines Trennmessers als Trennelement ist in den Figuren 6a und 6b dargestellt.

In Figur 6a ist die Vorrichtung in der Vorlaufstellung gezeigt, in der die Stränge 21 aus den Düsen 23 frei herabfallen. Für die Bewegung des Wasserkastens 12 ist hier die pneumatisch betätigte Kolben-Zylinder-Einheit 30 vorgesehen, die mit ihrem Stößel 31 an einem an den Wasserkasten 12 befestigten Arm 39 ansetzt. Aufgrund der Betätigung der Kolben-Zylinder-Einheit 30 wird der Wasserkasten 12 mit dem Abschnitt 11 in die in Figur 6b dargestellte Betriebslage verschoben, was den Erläuterungen zu den Figuren 2a und 2b entspricht.

Als Trennelement ist bei den in Figuren 6a und 6b dargestelten Vorrichtung das Abstreifmesser 32 vorgesehen, das mittels des auf der Achse 33 gelagerten Hebels 34 über die in diesem Falle mit einer zylindrischen Oberfläche versehene Düsenplatte 35 geführt wird. Der Hebel 34 ist mit seinem dem Abstreifmesser 32 abgewandten Ende an der Kolbenstange 36 der pneumatisch betätigten Kolben-Zylinder-Einheit 37 angelenkt, bei deren Betätigung der Hebel 34 eine Verschwenkbewegung ausführt, die ihn schließlich in die in Figur 6b dargestellte Betriebslage überführt.

Die Bewegung des verschiebbaren Abschnitts 11 und des Abstreifmessers 32 wird nun mittels der nur prinzipiell dargestellten Steuerung 38 so eingestellt, daß sich ein Bewegungsablauf ergibt, wie er anhand der Figuren 2a und 2b beschrieben ist. Anstelle der durch mechanische Verbindung von Abschnitt 1 und Abstreifmesser 18 gegebenen Synchronisierung liegt hier eine durch die Steuerung 38 bewirkte Synchronisierung vor. Derartige Steuerungen sind bekannt, sie werden z. B. bei Verpackungsmaschinen, Werkzeugmaschinen und dgl. als Ablaufsteuerungen verwendet. Eine derartige Steuerung kann insbesondere dann im Zusammenhang mit der hier beschriebenen Erfindung verwendet werden, wenn die zugrundeliegende Vorrichtung für andere Arbeitsabläufe bereits eine besondere Steuerung enthält.

Aufgrund der Steuerung 38 wird also hinsichtlich des Bewegungsablaufs die gleiche Wirkung wie bei der Vorrichtung gemäß den Figuren 2a und 2b erzielt, so daß hinsichtlich der Wirkungsweise der Vorrichtung gemäß den Figuren 6a und 6b auf die Erläuterungen zu Figuren 2a und 2b verwiesen werden kann.

Es sei noch darauf hingewiesen, daß im Zusammenhang mit einer besonderen Steuerung als Trennelement natürlich auch eine Stange, wie die Stange 27, verwendet werden kann, der in diesem Falle ähnlich dem Hebel 34 ein eigener Vorschubmechanismus zu geben ist.

Die in Figur 6 dargestellte Vorrichtung kann auch dazu verwendet werden, oxydierte Schmelzeablagerungen unmittelbar am Düsenaustritt zu entfernen, wie solche Oxydationen im Laufe einer längeren Betriebszeit entstehen. Derartiges Material ist für den weiteren Verarbeitungsprozeß unbrauchbar. Fällt es von selbst von der Düsenplatte ab, so wird es von dem über den verschiebbaren Abschnitt 11 fließenden Wasserstrom mitgeschwemmt und bewirkt dann meist eine Verschmutzung des granulierten Materials, insbesondere dessen Verfärbung. Um dies zu vermeiden, kann die Vorrichtung gemäß Fig. 6 während des Betriebes hin und her verschoben werden, also aus der Betriebslage (Fig. 6b) in die Vorlaufstellung (Fig. 6a) und wieder zurück in die Betriebslage, wobei die Düsenplatte 35 von dem Abstreifmesser 32 überstrichen wird. Dabei nimmt das Abstreifmesser 32 die erwähnten Materialoxydationen mit. Damit nun derartige Materialoxydationen vom Abstreifmesser 32 nicht auf den verschiebbaren Abschnitt 11 fallen können, wird in diesem Falle die Steuerung 38 so eingestellt, daß für die Bewegung des Abstreifmessers 32 aus der Betriebslage (Fig. 6b) in die Vorlaufstellung (Fig. 6a) der Abschnitt 11 schon vorher verschoben wird, so daß zunächst der Abschnitt 11 aus der in Fig. 6b dargestellten Betriebslage in die in Fig. 6a gezeigte Vorlaufstellung gebracht wird, woraufhin dann das Abstreifmesser 32 aus der Lage gemäß Fig. 6b in die Lage gemäß Fig. 6a überführt wird. Dabei herabfallende Oxydationen fallen dann also in den Abfall. Die Bewegung von Abstreifmesser 32 und Abschnitt 11 aus der Vorlaufstellung (Fig. 6a) in die Betriebslage (Fig. 6b) erfolgt dann in normaler Weise.

**Patentansprüche**

1. Vorrichtung zum Zuleiten von schmelzflüssigen Kunststoffsträngen (26) zu einer schrägen Ablaufrinne (1, 2), die an ihrem oberen Ende bis hinter die Fallinie der aus Düsen (23) austretenden Stränge (21) reicht, in der Betriebslage die Stränge (26) auffängt und in eine Vorlaufstellung bewegbar ist, in der sie den freien Durchtritt der Stränge (21) neben ihr gestattet, wobei auf das obere Ende der Ablaufrinne (1, 2) ein Kühlwasserzulauf (14) gerichtet ist und die Ablaufrinne (1, 2) an ihrem oberen Ende einen ihr gegenüber längs einer Schlittenführung aus der Vorlaufstellung in die Betriebslage verschiebbaren Abschnitt (11) aufweist, der in der Betriebslage die Stränge (26) auffängt und dem ein Trennelement (18, 27) zugeordnet ist, das beim Verschieben der Stirnseite (24) des Abschnitts (11) durch die Fallinie der Stränge (21) in die Betriebslage die Stränge (21) erfaßt und anschließend durchtrennt.

2. Vorrichtung nach Anspruch 1, dadurch gekennzeichnet, daß der Abschnitt (11) mit dem Trennelement (18, 27) versehen ist.

3. Vorrichtung nach Anspruch 1, dadurch gekennzeichnet, daß das Trennelement (18, 27) auf einer Führung (16) angebracht ist, die mit dem Abschnitt (11) über eine Steuerung gekuppelt ist.

4. Vorrichtung nach einem der Ansprüche 1 bis 3, dadurch gekennzeichnet, daß das Trennelement aus einem Abstreifmesser (18) besteht, das bei der Bewegung des Abschnitts (11) in die Betriebslage eine die Düsen (23) enthaltende Platte (19) überstreicht und dabei die austretenden Stränge (21) unterbricht.

5. Vorrichtung nach einem der Ansprüche 1 bis 3, dadurch gekennzeichnet, daß das Trennelement aus einer mit Abstand oberhalb des oberen Endes des Abschnitts (11) angeordneten Stange (27) besteht, die bei der Bewegung des Abschnitts (11) in die Betriebslage die Stränge (21) ohne deren wesentliche Abkühlung auffängt und gegenüber den weiterfließenden Strängen bis zu deren Abreißen festhält.

## Claims

1. A device for feeding molten plastics strands (26) to a tilted gutter (1, 2) which, in the operating position, reaches by its upper end to behind the line of fall of strands (21) emerging from nozzles (23), catches the strands (26) in such operating position and is movable into a forward position in which it allows the strands (21) to pass freely beside it, a stream (14) of cooling water being directed on to the upper end of the gutter (1, 2) and the gutter (1, 2) comprising, at its upper end, a portion (11) which is oppositely relatively slidable, from the forward position into the operating position in which it catches the strands (26), and associated with which is a severing element (18, 27) which, on displacement of the end face (24) of the portion (11) through the line of fall of the strands (21) and into the operating position, intercepts the strands (21) and cuts through them.

2. A device as claimed in claim 1, characterised in that the portion (11) is provided with the severing element (18, 27).

3. A device as claimed in claim 1, characterised in that the severing element (18, 27) is mounted on a guide (16) which is coupled to the portion (11) through a control.

4. A device as claimed in one of the claims 1 to 3, characterised in that the severing element consists of a scraping knife (18) which, during the movement of the portion (11) into the operating position, sweeps over a plate (19) containing the nozzles (23) and, in the course of this, interrupts the emerging strands (21).

5. A device as claimed in one of the claims 1 to 3, characterised in that the severing element consists of a bar (27) spaced above the upper end of the portion (11) and which, during the movement of the portion (11) into the operating position, catches the strands (21) before they have been substantially cooled and holds them, against their continued flow, until they break away.

## Revendications

1. Dispositif d'alimentation de boudins (26) en matière plastique en fusion à une glissière d'enlèvement inclinée (1, 2), qui s'étend à son extrémité supérieure jusque derrière la ligne de chute des boudins (21) portant des filières (23) qui recueille les boudins (26) dans sa section de fonctionnement et est déplaçable dans une position avancée où elle autorise le passage des boudins (21), une arrivée (14) d'eau de refroidissement étant dirigée vers l'extrémité supérieure de la glissière d'enlèvement (1, 2) et cette dernière présentant à son extrémité supérieure un tronçon (11) coulissant par rapport à la glissière, le long d'un guidage, de la position avancée à la position de fonctionnement, le tronçon (11) recueillant les boudins (26) en position de fonctionnement et étant associé à un élément de sectionnement (18, 27) qui, en position de fonctionnement et lors du déplacement de la face frontale (24) du tronçon (11) à travers la ligne de chute des boudins (21), saisit les boudins (21) puis les sectionne.

2. Dispositif selon la revendication 1, caractérisé en ce que le tronçon (11) est pourvu de l'élément de sectionnement (18, 27).

3. Dispositif selon la revendication 1, caractérisé en ce que l'élément de sectionnement (18, 27) est appliqué sur un dispositif de guidage (16) couplé au tronçon (11) par une commande.

4. Dispositif selon l'une des revendications 1 à 3, caractérisé en ce que l'élément de sectionnement est une racle (18) qui, pendant le déplacement du tronçon (11) en position de fonctionnement passe sur une plaque (19) contenant les filières (23) et sectionne ainsi les boudins (21) sortants.

5. Dispositif selon l'une des revendications 1 à 3, caractérisé en ce que l'élément de sectionnement est une barre (27) disposée à une certaine distance au-dessus de l'extrémité supérieure du tronçon (11), qui, pendant le déplacement du tronçon (11) en position de fonctionnement, saisit les boudins (21) qui ne sont pratiquement pas refroidis et les maintient par rapport aux autres boudins qui continuent de s'écouler, jusqu'à leur sectionnement.

FIG. 1

FIG.2A

FIG.2B

0 086 400

FIG.3

FIG. 4A

FIG. 4B

FIG.5

FIG.6B

FIG.6A